(19) Europäisches Patentamt
European Patent Office
Office européen des brevets

(11) **EP 4 087 821 B1**

(12) **EUROPÄISCHE PATENTSCHRIFT**

(45) Veröffentlichungstag und Bekanntmachung des Hinweises auf die Patenterteilung:
**17.09.2025   Patentblatt 2025/38**

(21) Anmeldenummer: **21700486.0**

(22) Anmeldetag: **04.01.2021**

(51) Internationale Patentklassifikation (IPC):
*C01G 41/00* (2006.01)     *B01J 31/00* (2006.01)
*C08F 4/78* (2006.01)

(52) Gemeinsame Patentklassifikation (CPC):
**C01G 41/00;** C01P 2002/72; C01P 2002/74;
C01P 2004/02; C01P 2004/61; C01P 2006/10;
C01P 2006/80

(86) Internationale Anmeldenummer:
**PCT/EP2021/050013**

(87) Internationale Veröffentlichungsnummer:
**WO 2021/140065 (15.07.2021 Gazette 2021/28)**

(54) **WOLFRAM(VI)OXIDTETRACHLORID MIT HOHER REINHEIT UND VERFAHREN ZU DESSEN HERSTELLUNG**

HIGH-PURITY TUNGSTEN(VI) OXYTETRACHLORIDE AND PROCESS FOR PREPARING SAME

OXYTÉTRACHLORURE DE TUNGSTÈNE (VI) DE PURETÉ ÉLEVÉE ET SON PROCÉDÉ DE PRÉPARATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.01.2020   DE 102020200087**
**08.12.2020   DE 102020132629**

(43) Veröffentlichungstag der Anmeldung:
**16.11.2022   Patentblatt 2022/46**

(73) Patentinhaber: **TANIOBIS GmbH**
**38642 Goslar (DE)**

(72) Erfinder:
• SCHNITTER, Christoph
31188 Holle (DE)
• BRUMM, Holger
38644 Goslar (DE)
• PASSING, Gerd
50354 Hürth (DE)
• KUPKA, Tomasz
38644 Goslar (DE)

(56) Entgegenhaltungen:
EP-A1- 3 738 928

• P C CROUCH: "The high yield synthesis of the tungsten(VI)oxyhalides WO C14, WOBr4 and WO 2Cl2 and some observations on tungsten(VI) bromide and tungsten(V)chloride", JOURNAL OF INORGANIC AND NUCLEAR CHEMISTRY, vol. 32, no. 1, 1 January 1970 (1970-01-01), pages 329 - 333, XP055532735
• CRABTREE ROBERT H. ET AL: "On a convenient synthesis of WOCl4 and the question of the existence of Cp2WOCl2", POLYHEDRON., vol. 4, no. 3, 1 January 1985 (1985-01-01), GB, pages 521 - 522, XP055784708, ISSN: 0277-5387, DOI: 10.1016/S0277-5387(00)87022-9

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft Wolfram(VI)oxidtetrachlorid, dass sich durch eine besondere chemische Reinheit und Phasenreinheit auszeichnet, sowie ein Verfahren zu dessen Herstellung.

Wolfram(VI)oxidtetrachlorid ist eine anorganische Verbindung des Wolframs aus der Gruppe der Oxidchloride mit der Verhältnisformel $WOCl_4$. Wolfram(VI)oxidtetrachlorid wird hauptsächlich als Katalysator zur Herstellung von Olefinen, insbesondere in Ringöffnungsreaktionen, eingesetzt. Weitere Einsatzgebiete für Wolfram(VI)oxidtetrachlorid finden sich in der Halbleiterindustrie und als Ausgangsverbindung in Sol-Gel-Prozessen.

DE 33 47 918 beschreibt ein Glassubstrat mit einem thermochromatischen, $VO_2$ oder $V_2O_3$ enthaltenden Überzug mit variabler Durchlässigkeit für Sonnenstrahlen, wobei eine optische Änderung innerhalb eines Temperaturbereichs von 25 bis 75 °C erfolgt und die Durchlässigkeit für die gesamte Sonnenenergie in dem infraroten Bereich um einen Faktor von mindestens zwei abnimmt, wenn der Überzug durch seinen Temperaturübergangsbereich erwärmt wird, wobei der $VO_2$ oder $V_2O_3$ enthaltende Überzug eine durch chemische Zersetzung und gegebenenfalls Reduktion einer chemisch abgeschiedenen Vanadiumverbindung erzeugte Schicht ist, die mit Metalloxiden von Metallen, die einen größeren Ionenradius als Vanadium aufweisen, dotiert ist. Als geeigneter Dotierstoff wird unter anderem $WOCl_4$ genannt, durch dessen Zugabe die Umwandlungstemperatur des $VO_2$-Films erniedrigt werden kann.

N. Ozer et al beschreiben in ihrem Aufsatz "Optical and Electrochromic Properties of Sol-Gel Deposited Doped Tungsten Oxide Films" von Januar 1996 die Verwendung von $WOCl_4$ als Vorläuferverbindung bei der Herstellung von mit Wolframoxid gedopten Filmen.

EP 3 738 928 beschreibt Molybdänoxychlorid und Wolframoxychlorid mit einem Feuchtigkeitsgehalt von weniger als 1 Gew.-%, die dadurch hergestellt werden, dass Molybdänoxid oder Wolframoxid einer Dehydrationsbehandlung bei Temperaturen von 400 bis 800 °C unterzogen wird und das dehydrierte Material anschließend mit Chlorgas behandelt wird.

R.H. Chabtree beschreiben in ihrem Artikel "On a convenient synthesis of WOCl4 and the question of the existence of Cp2WOCl2", erschienen in Polyhedron Vol. 4, Nr. 3, Seiten 521-522, 1985, die Synthese von $WOCl_4$ durch Umsetzung von Wolframsäure in siedendem $SOCl_2$.

Für die Herstellung von Wolfram(VI)oxidtetrachlorid sind dem Fachmann verschiedene Verfahren bekannt, beispielsweise durch Reaktion von Wolfram(VI)oxid, Wolfram(VI)chlorid oder Natriumwolframat mit Thionylchlorid oder durch thermische Zersetzung von Wolfram(VI)dioxiddichlorid. Weitere Herstellungsverfahren beinhalten das Kochen von Wolfram(VI)oxid in Octachlorcyclopenten oder die Umsetzung stöchiometrischer Mengen von Wolfram(VI)oxid mit Wolfram(VI)chlorid in einer evakuierten Ampulle bei 200 °C.

F. Zado beschreibt in seinem Aufsatz "The high yield synthesis of the Tungsten(VI) oxyhalides WOCl4, WOBr4 and WO2Cl2 and some observations on tungsten(VI) bromide and tungsten(V) chloride", erschienen in J. Inorg. Nucl. Chem. 25, 1115 (1963), die Herstellung von Wolfram(VI)oxidtetrachlorid, in dem $WCl_6$ und $WO_3$ in einer evakuierten Ampulle versiegelt und auf 100 °C erhitzt werden. Die Temperatur wurde nach zwei Stunden auf 150 °C erhöht und die Ampulle so gelagert, dass das abgeschiedene Produkt über einen Zeitraum von 24 Stunden sublimiert werden konnte.

A.E. Castro Lunar et al beschreiben in J. Chem. Eng. Data 1983, 26, 349-350 unter dem Titel *"Vapour Pressure of WOCl_4"* die Herstellung von Wolfram(VI)oxidtetrachlorid durch Umsetzung von $CCl_4$ mit $WO_3$ bei 673 K.

Weitere bekannte Herstellungsverfahren für Wolfram(VI)oxidtetrachlorid sind beispielsweise die Umsetzung von $WCl_6$ mit einer organischen Siliziumverbindung gemäß der Reaktion

$$WCl_6 + Me_3Si\text{-}O\text{-}SiMe_3 \rightarrow WOCl_4 + 2\ Me_3SiCl,$$

die bereits erwähnte Verwendung von Thionylchlorid gemäß der Reaktion

$$WO_3 + 2\ SOCl_2 \rightarrow WOCl_4 + 2\ SO_2.$$

sowie die einstufige Umsetzung von erhitztem Wolfram in sauerstoffhaltigem $Cl_2$-Gas.

Die im Stand der Technik beschriebenen Verfahren weisen allerdings den Nachteil auf, dass das Wolfram(VI)oxidtetrachlorid meist einen deutlichen Anteil an Verunreinigungen, wie metallische Verunreinigungen und andere Wolframverbindungen, die sich durch weitere Kristallphasen äußern, aufweist und die Verfahren nur im Labormaßstab angewendet werden können. So wird der chemische Reinheitsgrad von kommerziell erhältlichem Wolfram(VI)oxidtetrachlorid mit 98 bis 99,95% angegeben, bezogen auf metallische Verunreinigungen. Zwar lassen sich die meisten der metallischen Verunreinigungen durch weitere Reinigungsschritte, beispielsweise Sublimation, entfernen. Durch die Sublimation kommt es aber zu einem vermehrten Kristallwachstum, so dass das Wolfram(VI)oxidtetrachlorid in Form großer, nadelförmiger Kristalle mit einem niedrigen Schüttgewicht vorliegt, die für eine Reihe von Anwendungen von Nachteil sind. Um geeignete Partikelgrößen zu erhalten, müssen die Kristalle beispielsweise durch Mahlverfahren entsprechend prozessiert werden. Aufgrund der geringen Stabilität von Wolfram(VI)oxidtetrachlorid führt dies jedoch zum Eintrag von metallischen Verunreinigungen als auch zur Ausbildung unerwünschter Phasen. Dies wird weiterhin dadurch verstärkt, dass bei der Zersetzung von Wolfram(VI)oxidtetrachlorid stark korrosive Verbindungen wie beispielsweise Salzsäure entstehen. Auch weisen die herkömmlich notwendigen Reinigungsverfahren den Nachteil auf, dass manche Verunreinigungen, insbesondere weitere Wolframverbindungen und einige Nichtmetalle gar nicht oder nur unzureichend entfernt werden können.

Es ist daher Aufgabe der vorliegenden Erfindung, Wolfram(VI)oxidtetrachlorid bereitzustellen, das die Nachteile des Standes der Technik überwindet sowie ein einfaches und effizientes Verfahren zu dessen Herstellung, das auch im großtechnischen Maßstab umgesetzt werden kann und ohne zusätzliche mechanische Aufarbeitungsschritte, wie beispielsweise Mahlen, Sieben oder Sublimieren, auskommt.

Die Aufgabe wird durch die Bereitstellung von Wolfram(VI)oxidtetrachlorid mit einem hohen chemischen und kristallographischen Reinheitsgrad und einer speziellen Morphologie gelöst.

Ein erster Gegenstand der vorliegenden Anmeldung ist daher ein Wolfram(VI)oxidtetrachlorid, das eine chemische Reinheit von größer 99,95% aufweist und wobei das Wolfram(VI)oxidtetrachlorid einen Anteil an Verbindungen ausgewählt aus der Gruppe bestehend aus $WCl_6$, $WO_2Cl_2$, $WO_3$ und $WO_2$, definiert als das Verhältnis des Reflexes mit der höchsten Intensität einer dieser Verbindungen ($I(P2)100$) im Röntgendiffraktogramm und des Reflexes mit der höchsten Intensität des Wolfram(VI)oxidtetrachlorids ($I(WOCl_4)100$) im Röntgendiffraktogramm, ausgedrückt als $I(P2)100/I(WOCl_4)100$, von kleiner 0,03 aufweist.

Bei dem Wolfram(VI)oxidtetrachlorid gemäß der vorliegenden Erfindung handelt es sich insbesondere um Wolfram(VI)oxidtetrachlorid der Summenformel $WOCl_4$.

Im Rahmen der vorliegenden Erfindung wird unter der chemischen Reinheit einer Probe von $WOCl_4$ das Verhältnis der aufsummierten Gewichtsanteile der Elemente Wolfram, Chlor und Sauerstoff zu den aufsummierten Gewichtsanteilen aller übrigen verunreinigenden Elementen in der Probe verstanden. Die Reinheit des Stoffes wird dabei als Mengenverhältnis von $WOCl_4$ zum Gesamtgewicht der Probe ausgedrückt, wobei eine chemische Reinheit von 100% vorliegt, wenn außer den Elementen Wolfram, Chlor und Sauerstoff keine weiteren Komponenten in der Probe nachweisbar sind. Unter Verunreinigungen im Sinne der vorliegenden Erfindung werden sowohl metallische Verunreinigungen als auch nicht-metallische Verunreinigungen verstanden, insbesondere Silizium, Kohlenstoff, Schwefel, Molybdän, Eisen, Chrom und Nickel sowie deren Verbindungen.

Von der chemischen Reinheit ist die kristallographische Reinheit zu unterscheiden, unter der im Rahmen der vorliegenden Anmeldung das Verhältnis der Kristallphase einer unerwünschten Verbindung zu der Kristallphase der gewünschten Verbindung, im vorliegenden Fall Wolfram(VI)oxidtetrachlorid, verstanden. Das Verhältnis der Kristallphasen kann dabei beispielsweise mittels der Intensitäten der unterschiedlichen Phasen im Röntgendiffraktrogramm bestimmt werden. Geeignete Aufnahmen können an pulverförmigen Proben gemacht werden, beispielsweise mit einem Gerät der Firma Malvern-PANalytical (X'Pert-MPD mit Halbleiterdetektor, Röntgenröhre Cu LFF mit 40KV / 40mA, Ni-Filter).

Herkömmliches Wolfram(VI)oxidtetrachlorid kann neben den genannten chemischen Verunreinigungen weitere Verbindungen, wie beispielsweise $WCl_6$, und gegebenenfalls weitere Wolframoxide als sogenannte Nebenphasen aufweisen. Bei diesen Oxiden handelt es sich hauptsächlich um die verwandten Oxide $WO_2Cl_2$, $WO_3$ und $WO_2$, die eine andere Kristallstruktur als Wolfram(VI)oxidtetrachlorid besitzen und über Röntgendiffraktometrie nachweisbar sind. In einer besonders bevorzugten Ausführungsform weist das erfindungsgemäße Wolfram(VI)oxidtetrachlorid im Wesentlichen keine weiteren Wolframverbindungen und insbesondere keine weiteren Wolframoxidverbindungen auf. Vorzugsweise ist das erfindungsgemäße Wolfram(VI)oxidtetrachlorid im Wesentlichen frei von Verbindungen, die aus der Gruppe bestehend aus $WCl_6$, $WO_2Cl_2$, $WO_3$ und $WO_2$ ausgewählt sind. Der Anteil an weiteren Verbindungen wie oben aufgeführt kann über das Intensitätsverhältnis der Wolfram(VI)oxidtetrachlorid-Hauptphase zu den genannten Nebenphasen definiert werden. Die Haupt- und Nebenphasen können mittels ihrer Reflexintensitäten im Röntgendiffraktogramm, dort angegeben als Impulse pro Winkel [° 2Theta] ermittelt werden. In einer besonders bevorzugten Ausführungsform ist das Verhältnis des Reflexes mit der höchsten Intensität einer Nebenphase ($I(P2)100$) und des Reflexes mit der höchsten Intensität der Wolfram(VI)oxidtetrachlorid-Hauptphase ($I(WOCl_4)100$), ausgedrückt als $I(P2)100/I(WOCl_4)100$, vorzugsweise kleiner 0,02, besonders bevorzugt 0,001 bis 0,02, insbesondere 0,001 bis 0,01, jeweils bestimmt mittels Röntgendiffraktometrie. Das erfindungsgemäße Wolfram(VI)oxidtetrachlorid wird im Rahmen der vorliegenden Erfindung als im Wesentlichen frei von Verbindungen, die aus der Gruppe bestehend aus $WCl_6$, $WO_2Cl_2$, $WO_3$ und $WO_2$ ausgewählt sind und im Rahmen der vorliegenden Erfindung als Nebenphasen deklariert sind, angesehen, wenn das Verhältnis der Haupt- und Nebenphase wie oben definiert, 0,001 oder weniger ist. In einer weiteren bevorzugten Ausführungsform sind keine Nebenphasen nachweisbar. Die Ermittlung der Anteile weiterer Wolframverbindungen erfolgt dabei mittels Röntgendiffraktometrie, beispielsweise bestimmt an pulverförmigen Proben mit einem Gerät der Firma Malvern-PANalytical (X'Pert-MPD mit Halbleiterdetektor, Röntgenröhre Cu LFF mit 40KV / 40mA, Ni-Filter).

In einer bevorzugten Ausführungsform weist das erfindungsgemäße Wolfram(VI)oxidtetrachlorid eine chemische Reinheit von 99,99% oder mehr, vorzugsweise 99,995% oder mehr und besonders bevorzugt 99,999% oder mehr auf.

Herkömmliches Wolfram(VI)oxidtetrachlorid weist in der Regel eine Reihe von chemischen Verunreinigungen auf, die einen störenden Einfluss auf weitere Verwendungen des Wolfram(VI)oxidtetrachlorids haben können. Hierbei handelt es sich, je nach Herstellungsverfahren, insbesondere um Silizium und dessen Verbindungen, Schwefel und dessen Verbindungen sowie Kohlenstoff, Molybdän und Eisen. Im Gegensatz dazu zeichnet sich das erfindungsgemäße Wolfram(VI)oxidtetrachlorid durch einen niedrigen Grad an Verunreinigungen aus. In einer bevorzugten Ausführungsform weist das erfindungsgemäße Wolfram(VI)oxidtetrachlorid Silizium und/oder Siliziumverbindungen in einer Menge von weniger als 50 ppm, vorzugsweise in einer Menge von weniger als 25 ppm und besonders bevorzugt in einer Menge von weniger als 5 ppm auf, wobei sich die Angaben jeweils auf das Gesamtgewicht des Wolfram(VI)oxidtetrachlorids beziehen.

In einer weiterhin bevorzugten Ausführungsform weist das erfindungsgemäße Wolfram(VI)oxidtetrachlorid Schwefel und/oder Schwefelverbindungen in einer Menge von weniger als 100 ppm, vorzugsweise in einer Menge von weniger als 30 ppm und besonders bevorzugt in einer Menge von weniger als 10 ppm auf, wobei sich die Angaben jeweils auf das Gesamtgewicht des Wolfram(VI)oxidtetrachlorids beziehen.

Insgesamt beträgt der Anteil an metallischen Verunreinigen, abgesehen von Silizium, weniger als 100 ppm, vorzugsweise weniger als 70 ppm und besonders bevorzugt weniger als 50 ppm, wobei sich die Angaben jeweils auf das Gesamtgewicht des Wolfram(VI)oxidtetrachlorids beziehen. Bei den metallischen Verunreinigungen kann es sich beispielsweise um Elemente der 2. und 3. Hauptgruppe, um Refraktärmetalle und insbesondere um Eisen, Chrom, Nickel und Molybdän handeln. In einer besonders bevorzugte Ausführungsform weist das erfindungsgemäße Wolfram(VI) oxidtetrachlorid einen Anteil an Molybdän und/oder seinen Verbindungen von weniger als 20 ppm, vorzugsweise weniger als 10 ppm und besonders bevorzugt weniger als 5 ppm auf, jeweils bezogen auf das Gesamtgewicht des Wolfram(VI) oxidtetrachlorids.

Ebenfalls bevorzugt ist eine Ausführungsform, in der das erfindungsgemäße Wolfram(VI)oxidtetrachlorid Kohlenstoff in einer Menge von weniger als 200 ppm, vorzugsweise in einer Menge von weniger als 100 ppm und besonders bevorzugt in einer Menge von weniger als 40 ppm aufweist, wobei sich die Angaben jeweils auf das Gesamtgewicht des Wolfram(VI)oxidtetrachlorids beziehen.

Neben seiner hohen chemischen und kristallographischen Reinheit zeichnet sich das erfindungsgemäße Wolfram(VI)oxidtetrachlorid weiterhin durch seine Morphologie aus. Während herkömmliches Wolfram(VI)oxidtetrachlorid in der Regel in Form von großen nadelförmigen Kristallen vorliegt, konnte dies bei dem erfindungsgemäßen Wolfram(VI)oxidtetrachlorid überraschenderweise nicht beobachtet werden. In einer bevorzugten Ausführungsform liegt das erfindungsgemäße Wolfram(VI)oxidtetrachlorid daher in Form eines feinen Pulvers vor, wobei 90% aller Pulverpartikel eine Partikelgröße von 100 μm oder weniger aufweisen, vorzugsweise von 70 μm oder weniger, bestimmt mittels optischer Mikroskopie, und wobei die Partikelgröße die längste Ausdehnung des Partikels bezeichnet. Die Prozentangabe bezieht sich dabei auf die Gesamtanzahl der Pulverpartikel. Es wurde überraschend gefunden, dass durch die spezielle Morphologie des erfindungsgemäßen Wolfram(VI)oxidtetrachlorid die Lösekinetik des Wolfram(VI)oxidtetrachlorids in der weiteren Anwendung verbessert werden konnte.

Durch die spezielle Morphologie des erfindungsgemäßen Wolfram(VI)oxidtetrachlorid konnte weiterhin die Schüttdichte, teilweise auch als Schüttgewicht bezeichnet, deutlich verbessert werden. In einer bevorzugten Ausführungsform weist das erfindungsgemäße Wolfram(VI)oxidtetrachlorid eine Schüttdichte von mehr als 0,5 g/cm³ auf. Die Schüttdichte $\rho_{Sch}$ ist dabei definiert als Verhältnis der Masse $m$ der Schüttung zum eingenommenen Schüttvolumen $V_{Sch}$ gemäß der Formel

$$\rho_{Sch} = \frac{m}{V_{Sch}} \text{ und kann mittels der ASTM B329-06 bestimmt werden.}$$

Ein weiterer Gegenstand der vorliegenden Erfindung ist ein Verfahren zur Herstellung des erfindungsgemäßen Wolfram(VI)oxidtetrachlorids. Das erfindungsgemäße Verfahren zeichnet sich dadurch aus, dass in einem ersten Schritt a) Wolframmetall mit Chlorgas und Sauerstoff bei einer Temperatur T(1) zur Reaktion gebracht wird und das erhaltene Produktgemisch in einem weiteren Schritt b) einer Oxidation bei einer Temperatur T(2) in Gegenwart eines Oxidationsmittels unterzogen wird unter Erhalt des erfindungsgemäßen Wolfram(VI)oxidtetrachlorids.

Beim eingesetzten Wolframmetall in Schritt a) handelt es sich vorzugsweise um ein Metallpulver mit einer Partikelgröße D90 von kleiner 300 μm, vorzugsweise mit einer Partikelgröße D90 kleiner 150 μm, bestimmt mittels ASTM B822. Der D90-Wert der Partikelgröße bezeichnet dabei den Anteil an Partikeln, die eine Partikelgröße kleiner dem angegebenen Wert haben.

Die Reaktion in Schritt a) des erfindungsgemäßen Verfahrens wird vorzugsweise bei einer Temperatur T(1) von 600 bis 1000 °C vorgenommen.

Ohne an eine bestimmte Theorie gebunden zu sein, wird im Rahmen der vorliegenden Erfindung davon ausgegangen, dass in Schritt a) des erfindungsgemäßen Verfahrens durch die Reaktion des Wolframmetalls mit Chlorgas und Sauerstoff ein Gemisch aus Wolfram(VI)oxidtetrachlorid und Wolfram(VI)chlorid erhalten wird. Im Rahmen des erfindungsgemäßen Verfahrens wurde überraschend gefunden, dass das anfallende Wolfram(VI)chlorid in einem weiteren Schritt selektiv zu Wolfram(VI)oxidtetrachlorid oxidiert werden kann, wodurch Wolfram(VI)oxidtetrachlorid mit einer hohen Reinheit und einer speziellen Morphologie erhalten wird.

Das erfindungsgemäße Verfahren bietet weiterhin den Vorteil, dass es Wolfram(VI)oxidtetrachlorid in hoher chemischer und kristallographischer Reinheit liefert und so auf weitere Aufarbeitungsschritte wie beispielsweise Sublimieren verzichtet werden kann. Daher ist eine Ausführungsform des erfindungsgemäßen Verfahrens bevorzugt, in dem auf weitere Reinigungsschritte und/oder Prozessschritte, insbesondere Sublimieren und/oder Mahlen, verzichtet wird. Ohne an eine bestimmte Theorie gebunden zu sein, wird davon ausgegangen, dass der Verzicht zusätzlicher Prozessschritte, wie Sublimieren, Mahlen oder Sieben, dazu beiträgt, dass dank des erfindungsgemäßen Verfahrens Wolfram(VI) oxidtetrachlorid erhalten wird, welches im Gegensatz zu herkömmlichem Wolfram(VI)oxidtetrachlorid in Form von kleinen Partikeln vorliegt.

Das in Schritt b) eingesetzte Oxidationsmittel ist vorzugsweise ausgewählt aus der Gruppe bestehend aus Sauerstoff, Wasser und Wasserdampf. Als besonders bevorzugtes Oxidationsmittel wird in Schritt b) des erfindungsgemäßen Verfahrens Wasser oder Wasserdampf eingesetzt. Vorzugsweise wird bei der Verwendung von Wasser als Oxidationsmittel in Schritt b) des erfindungsgemäßen Verfahrens die Oxidation bei einer relativen Luftfeuchtigkeit von 20 bis 80%, bevorzugt von 40 bis 60% durchgeführt.

Herkömmlicherweise erfolgt die Oxidation von Wolframchloridverbindungen bei Temperaturen von 300 °C und mehr. Im Rahmen des erfindungsgemäßen Verfahrens wurde überraschend gefunden, dass die Oxidation auch bei deutlich niedrigeren Temperaturen vorgenommen werden kann, ohne dass höhere Oxide oder Oxychloride, wie beispielsweise $WO_2Cl_2$ oder $WO_3$, entstehen und es zu Einbußen bei der Ausbeute kommt, insbesondere bei der Verwendung von Wasser als Oxidationsmittel. Daher ist eine Ausführungsform des Verfahrens bevorzugt, bei dem die Oxidation in Schritt b) bei einer Temperatur T(2) von 0 bis 80 °C, vorzugsweise 0 bis 60 °C, vorzugsweise für einen Zeitraum von 5 Minuten bis 50 Stunden vorgenommen wird.

Weiterhin hat es sich als vorteilhaft erwiesen, die Reaktion des Wolframmetalls mit Sauerstoff und Chlorgas entgegen der allgemeinen Erwartung in einer Atmosphäre vorzunehmen, in der der Sauerstoff in einem unterstöchiometrischen Verhältnis im Verhältnis zum Wolframmetall vorliegt. Daher ist eine Ausführungsform bevorzugt, in der der Sauerstoff in Schritt a) in einem unterstöchiometrischen Verhältnis eingesetzt wird. Vorzugsweise beträgt das stöchiometrische Verhältnis von Sauerstoff zu Wolframmetall in Schritt a) des erfindungsgemäßen Verfahrens 0,85 bis 0,97, besonders bevorzugt 0,85 bis 0,9.

Eine Reihe von im Stand der Technik bekannter Verfahren zur Herstellung von Wolfram(VI)oxidtetrachlorid beruht auf der Verwendung von organischen Verbindungen, insbesondere organischen Schwefel- und Siliziumverbindungen. Im Rahmen der vorliegenden Erfindung wurde überraschend gefunden, dass Wolfram(VI)oxidtetrachlorid in hoher Reinheit unter milden Bedingungen auch ohne die Verwendung solcher, teilweise gesundheitsschädlichen Verbindungen erhalten werden kann. Daher ist eine Ausführungsform des erfindungsgemäßen Verfahrens bevorzugt, in der in dem erfindungsgemäßen Verfahren keine Schwefel- und/oder Siliziumverbindungen und/oder Chlorkohlenwasserstoffe eingesetzt werden.

Das gemäß dem erfindungsgemäßen Verfahren hergestellte Wolfram(VI)oxidtetrachlorid unterscheidet sich nicht nur hinsichtlich seines Reinheitsgrades sondern insbesondere auch bezüglich seiner Morphologie von Wolfram(VI) oxidtetrachlorid, das mittels herkömmlicher Verfahren hergestellt wurde. Das mittels dem erfindungsgemäßen Verfahren hergestellte Wolfram(VI)oxidtetrachlorid zeichnet sich dadurch aus, dass 90% aller Partikel eine Partikelgröße von 100 $\mu$m oder weniger, vorzugsweise 70 $\mu$m oder weniger aufweisen, bestimmt mittels optischer Mikroskopie. Die Prozentangaben beziehen sich dabei auf die Gesamtanzahl der Partikel. Die Partikelgröße bezeichnet dabei die längste Abmessung des Partikels.

Ein weiterer Gegenstand der vorliegenden Erfindung ist die Verwendung des erfindungsgemäßen Wolfram(VI) oxidtetrachlorids oder des gemäß dem erfindungsgemäßen Verfahren gewonnenen Wolfram(VI)oxidtetrachlorids als Katalysator in chemischen Reaktionen, insbesondere in der Herstellung von funktionalen Kohlenwasserstoffen; in der Halbleiterindustrie, und/oder in Sol-Gel-Prozessen, insbesondere zur Herstellung elektrochromer Beschichtungen.

Die vorliegende Erfindung wird anhand der folgenden Beispiele und Figuren näher erläutert, wobei diese keineswegs als Einschränkung des Erfindungsgedanken zu verstehen sind.

Beispiele:

1. Vergleichsbeispiel 1

Wolfram(VI)oxidtetrachlorid wurde gemäß der folgenden Reaktionsgleichung hergestellt:

$$WCl_6 + Me_3Si\text{-}O\text{-}SiMe_3 \rightarrow WOCl_4 + 2\ Me_3SiCl \qquad \text{(Vgl. 1)}$$

Eine Analyse des erhaltenen Wolfram(VI)oxidtetrachlorid einschließlich der chemischen Reinheit, der nachgewiesenen kristallinen Phasen, der Partikelgröße und des Schüttgewichts ist in Tabelle 1 zusammengefasst.

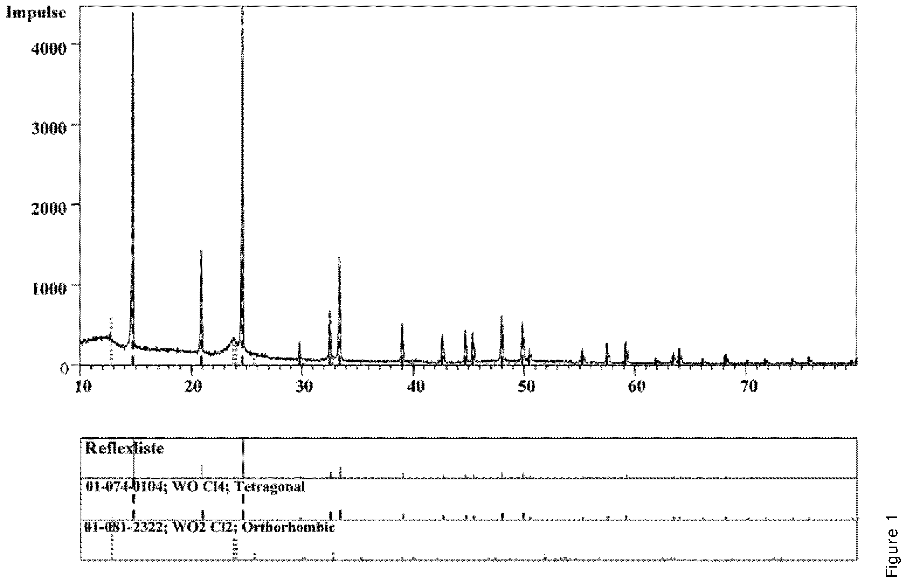

Wie aus Figur 1 ersichtlich, die ein Röntgenbeugungsdiagramm des erhaltenen Wolfram(VI)oxidtetrachlorid zeigt, lagen neben der gewünschten Verbindung auch signifikante Anteile an $WO_2Cl_2$ vor.

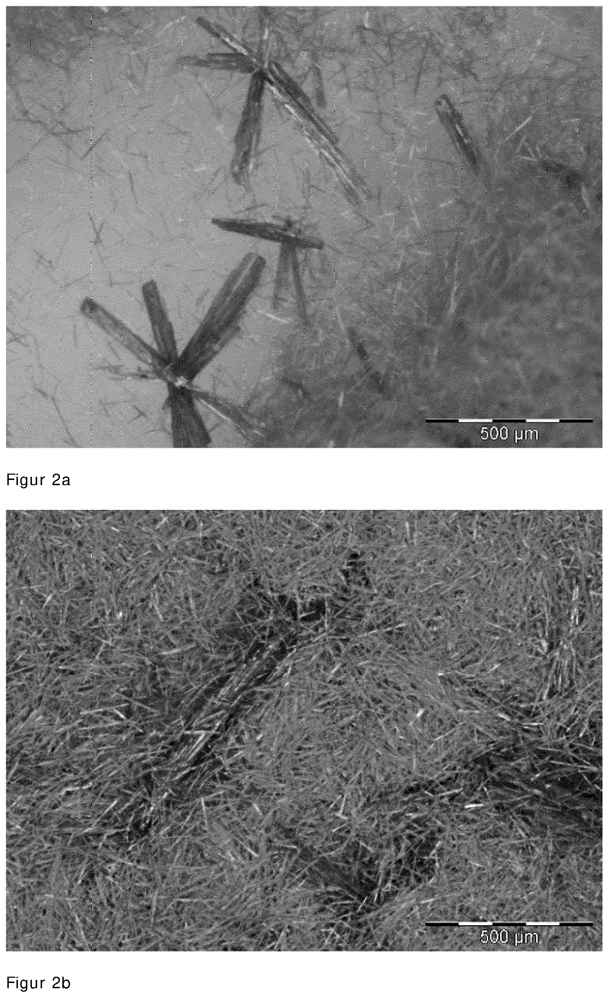

Die Figuren 2a und 2b zeigen lichtmikroskopische Aufnahmen des gemäß des Formel Vgl. 1 hergestellten Wolfram(VI)oxidtetrachlorids, wobei eindeutig die nadelförmige Form der Kristalle zu erkennen ist und weniger als 40% aller Partikel eine Größe von weniger als 100 $\mu$m aufweisen.

2. Vergleichsbeispiel 2

Als weiterer Vergleich wurde Wolfram(VI)oxidtetrachlorid gemäß der folgenden Reaktionsgleichung hergestellt:

$$WO_3 + 2\ SOCl_2 \rightarrow WOCl_4 + 2\ SO_2 \qquad (Vgl.\ 2)$$

Eine Analyse des erhaltenen Wolfram(VI)oxidtetrachlorid einschließlich der chemischen Reinheit, der nachgewiesenen kristallinen Phasen, der Partikelgröße und des Schüttgewichts ist in Tabelle 1 zusammengefasst.

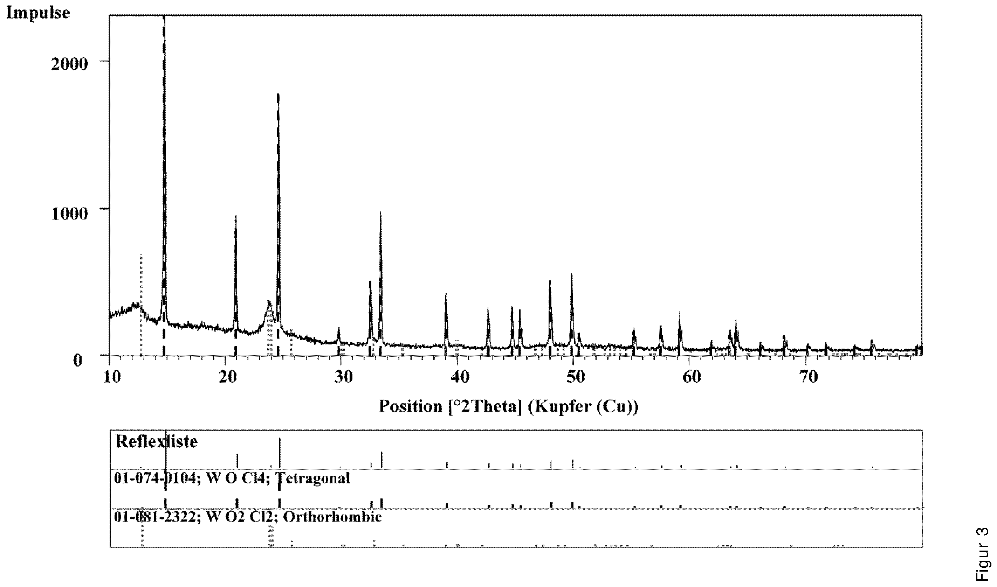

Ein Röntgenbeugungsdiagramm des Produkts belegt, dass neben dem gewünschten Wolfram(VI)oxidtetrachlorid $WO_2Cl_2$ als Nebenprodukt vorlag (Figur 3).

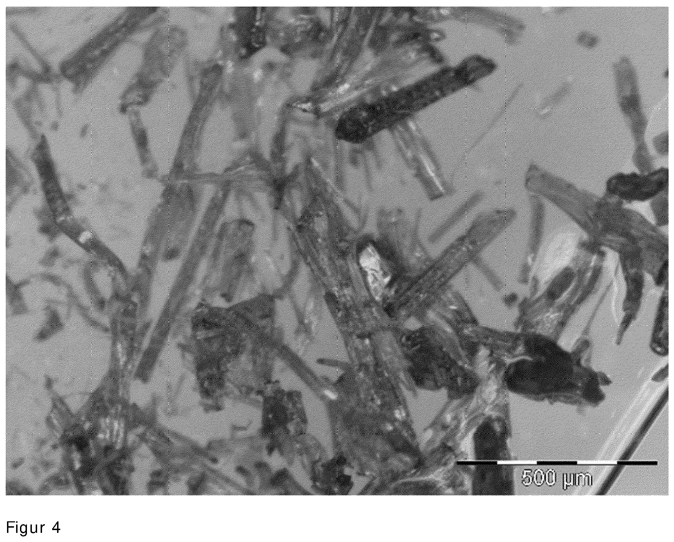

Figur 4 zeigt eine lichtmikroskopische Aufnahme des gemäß der Formel Vgl. 2 hergestellten Wolfram(VI) oxidtetrachlorids, wobei eindeutig die nadelförmige Form der Kristalle zu erkennen ist und weniger als 10% aller Partikel eine Größe von weniger als 100 $\mu$m aufweisen.

3. Vergleichsbeispiel 3

Als weiterer Vergleich wurde Wolfram(VI)oxidtetrachlorid gemäß der folgenden Reaktionsgleichung in einer einstufigen Umsetzung bei 800°C hergestellt:

$$W + 2\ Cl_2 + 0.5\ O_2 \rightarrow WOCl_4 \qquad (Vgl.\ 3)$$

Eine Analyse des erhaltenen Wolfram(VI)oxidtetrachlorid einschließlich der chemischen Reinheit, der nachgewiesenen kristallinen Phasen, der Partikelgröße und des Schüttgewichts ist in Tabelle 1 zusammengefasst.

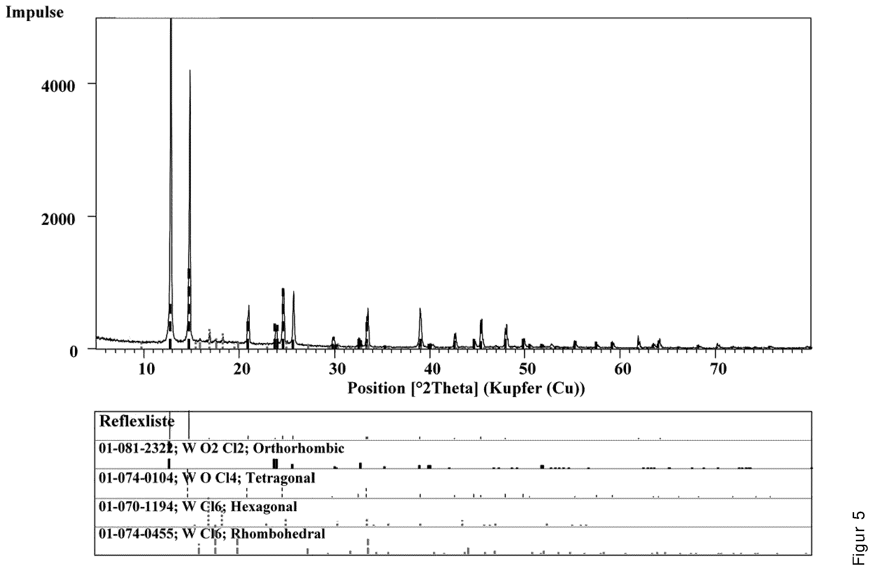

Das erhaltene Wolfram(VI)oxidtetrachlorid zeigte ein Röntgenbeugungsdiagramm (Figur 5), das neben dem gewünschten Wolfram(VI)oxidtetrachlorid noch signifikante Mengen an $WCl_6$ sowie $WO_2Cl_2$ enthielt. Zu beachten ist, dass in diesem Versuch $WO_2Cl_2$ sogar die Hauptphase darstellt und Wolfram(VI)oxidtetrachlorid nur eine Nebenphase. Reproduktionsversuche unter identischen Bedingungen bestätigten das Auftreten dieser drei Verbindungen in wechselnden Mengenverhältnissen, basierend auf Röntgenbeugungsuntersuchungen. Ein phasenreines Wolfram(VI)oxidtetrachlorid konnte durch die einstufige Umsetzung nicht hergestellt werden.

Auch zeigten lichtmikroskopische Aufnahme des gemäß der Formel Vgl. 3 hergestellten Wolfram(VI)oxidtetrachlorids eindeutig eine nadelförmige Form der Kristalle, wobei weniger als 50% aller Partikel eine Größe von weniger als 100 $\mu$m aufwiesen.

Tabelle 1

| Versuch | Röntgendiffraktometrie | | Partikelgröße (Lichtmikroskopie) | Chemische Spurenanalyse | | | | | | | | | Schüttgewicht |
| | qualitative Phasenzusammensetzung | quantitative Phasenzusammensetzung $I(P2)100 / I(WOCl4)100$ | Prozentuale Anzahl der Partikel $<100\mu m$ | Si | S | C | Mo | Fe | Summe aller metallischen Verunreinigungen | Summe aller Verunreinigungen einschließlich aller Nichtmetalle und Si | Chemische Reinheit | |
| | HP Hauptphase NP Nebenphasen | | [%] | [ppm] | [ppm] | [ppm] | [ppm] | [ppm] | [ppm] | [ppm / Gew.%] | [%] | [g/cm3] |
| Vgl. 1 | $WOCl_4$(HP), $WO_2Cl_2$ (NP) | 0,052 | <40% | 55 | 21 | 981 | 10 | 71 | 135 | 1192 / 0,1192 | 99,8808 | 0,43 |
| Vgl. 2 | $WOCl_4$(HP), $WO_2Cl_2$ (NP) | 0,108 | <10% | 15 | 352 | 240 | 11 | 80 | 104 | 711 / 0,0711 | 99,9289 | 0,33 |
| Vgl. 3 | $WO_2Cl_2$(HP) $WOCl_4$ (NP), $WCl_6$ (NP) | 1,19 | <50% | 6 | 11 | 21 | 9 | 10 | 68 | 106 / 0,0106 | 99,9894 | 0,39 |

4. Beispiel gemäß der Erfindung

Wolfram(VI)oxidtetrachlorid wurde erfindungsgemäß nach in einem zweistufigen Prozess hergestellt, wobei in einem ersten Schritt a) Wolframmetallpulver mit einer Partikelgröße D90 von weniger als 150 $\mu$m in einem $Cl_2$ Gasstrom und unter Zugabe von Sauerstoff in einem Stöchiometrieverhältnis von 0,85, bezogen auf die verwendete Menge an Wolfram, bei 800 °C zur Reaktion gebracht wurde.

Das erhaltene Reaktionsprodukt enthielt aufgrund der unterstöchiometrischen Zugabe von Sauerstoff (Stöchiometrieverhältnis ist 0,85) neben dem angestrebten Wolfram(VI)oxidtetrachlorid noch signifikante Mengen an WCle.

Das Produktgemisch aus $WOCl_4$ und $WCl_6$ wurde gemäß Schritt b) des erfindungsgemäßen Verfahrens unter unterschiedlichen Oxidationsbedingungen zum erfindungsgemäßen Wolfram(VI)oxidtetrachlorid umgesetzt, wobei die Oxidationsbedingungen sowie alle relevanten Analyseergebnisse zu den hergestellten Pulvern unter Versuch 4.1 bis 4.8 in Tabelle 2 zusammengefasst sind. Die Oxidation erfolgte in einem Klimaschrank mit Wasser, wobei dieser die relative Luftfeuchtigkeit und die Temperatur, wie in der Tabelle 2 angegeben, kontrollierte.

Eine Analyse des erhaltenen Wolfram(VI)oxidtetrachlorid einschließlich der chemischen Reinheit, der nachgewiesenen kristallinen Phasen, der Partikelgröße und des Schüttgewichts ist aus Tabelle 2 unter Versuch 4.0 ersichtlich.

Tabelle 2

| Versuch | Umsetzungsbedingunge n Schritt b) | | | Röntgendiffraktometrie | | Partikelgrö ße (Lichtmikr oskopie) | Chemische Spurenanalyse | | | | | | | Chemische Reinheit | Schüttgewicht |
|---|---|---|---|---|---|---|---|---|---|---|---|---|---|---|---|
| | | | | | | | Ergebnisse | | | | | | | | |
| | Relative Luftfe uchtig keit | Tempe -ratur | Zeit | qualitative Phasenzusamme nsetzung | quantitative Phasenzusamm ensetzung I(P2) 100 / I(WOCL4) 100 | Prozentual e Anzahl der Partikel <100μm | Si | S | C | Mo | Fe | Summe aller metallischen Verunreinigu ngen | Summe aller Verunreinigu ngen einschließlich aller Nichtmetalle und Si | | |
| | [%] | [°C] | [h] | HP Hauptphase NP Nebenphasen | | [%] | [ppm] | [ppm] | [ppm] | [ppm] | [ppm] | [ppm] | [ppm] | [%] | [g/cm3] |
| | | | | | | | | | | | | | | | |
| 4.0 | Ausgangsmaterial aus Schritt a) | | | WOCl4(HP), WCl6(NP) | 0,442 | >95% | 4 | 9 | 15 | 9 | 5 | 65 | 93 | 99,9907 | 0,59 |
| | | | | | | | | | | | | | | | |
| 4.1 | 60 | 5 | 1 | WOCl4(HP), WCl6(NP) | 0,01 | >95% | 3 | 9 | 16 | 8 | 8 | 60 | 88 | 99,9912 | 0,61 |
| 4.2 | 60 | 25 | 0,5 | WOC14 | Keine Nebenphase | >95% | 4 | 9 | 12 | 9 | 6 | 63 | 88 | 99,9912 | 0,58 |
| 4.3 | 60 | 25 | 1 | WOC14 | Keine Nebenphase | >95% | 4 | 8 | 17 | 7 | 9 | 67 | 96 | 99,9904 | 0,58 |
| 4.4 | 40 | 60 | 0,5 | WOC14 | Keine Nebenphase | >95% | 2 | 9 | 16 | 9 | 6 | 65 | 92 | 99,9908 | 0,61 |
| 4.5 | 60 | 60 | 0,5 | WOC14 | Keine Nebenphase | >95% | 4 | 6 | 19 | 6 | 7 | 68 | 97 | 99,9903 | 0,58 |
| 4.6 | 80 | 60 | 0,5 | WOCl4(HP), WO2Cl2(NP) | 0,0025 | >95% | 4 | 7 | 11 | 9 | 6 | 61 | 83 | 99,9912 | 0,63 |
| 4.7 | 60 | 90 | 0,2 | WOCl4(HP), WO2Cl2(NP) | 0,097 | >95% | 4 | 9 | 15 | 5 | 4 | 68 | 96 | 99,9904 | 0,65 |

(fortgesetzt)

| Versuch | Umsetzungsbedingunge n Schritt b) | | | Röntgendiffraktometrie | | Partikelgröße (Lichtmikroskopie) | Chemische Spurenanalyse | | | | | | | Chemische Reinheit | Schüttgewicht |
|---|---|---|---|---|---|---|---|---|---|---|---|---|---|---|---|
| | | | | | | | Si | S | C | Mo | Fe | Summe aller metallischen Verunreinigungen | Summe aller Verunreinigungen einschließlich aller Nichtmetalle und Si | | |
| | Relative Luftfeuchtigkeit | Tempe-ratur | Zeit | qualitative Phasenzusammensetzung | quantitative Phasenzusammensetzung I(P2) 100 / I(WOCL4) 100 | Prozentuale Anzahl der Partikel <100$\mu$m | | | | | | | | | |
| | [%] | [°C] | [h] | HP Hauptphase NP Nebenphasen | | [%] | [ppm] | [ppm] | [ppm] | [ppm] | [ppm] | [ppm] | [ppm] | [%] | [g/cm3] |
| 4.8 | 60 | 90 | 0,5 | WOCl4(HP), WO2Cl2(NP), | 0,471 | >95% | 3 | 5 | 15 | 8 | 5 | 65 | 88 | 99,9912 | 0,64 |

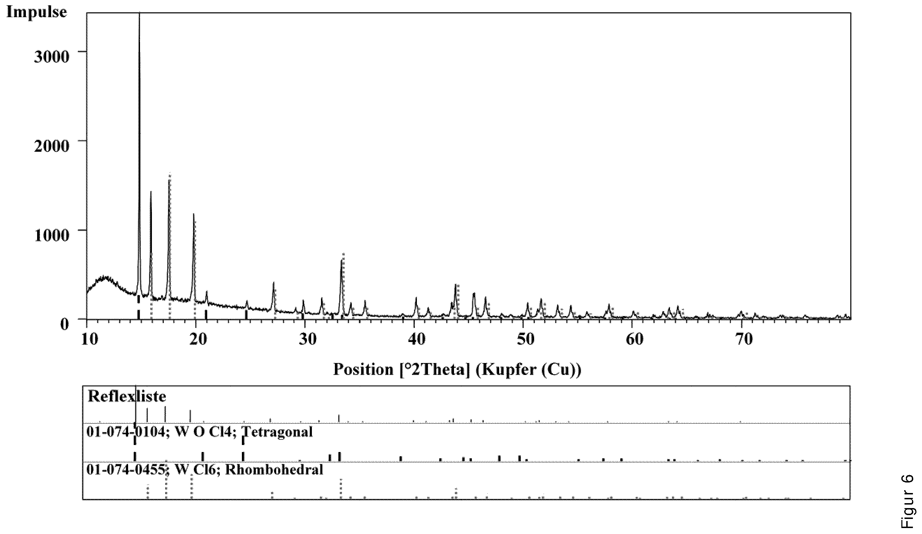

Figur 6 zeigt ein Röntgenbeugungsdiagramm des nach Schritt a) erhaltenen Zwischenproduktes aus Versuch 4.0. Wie aus dem Diagramm ersichtlich, liegen neben den genannten Verbindungen $WOCl_4$ und $WCl_6$ keine weiteren Wolframverbindungen vor.

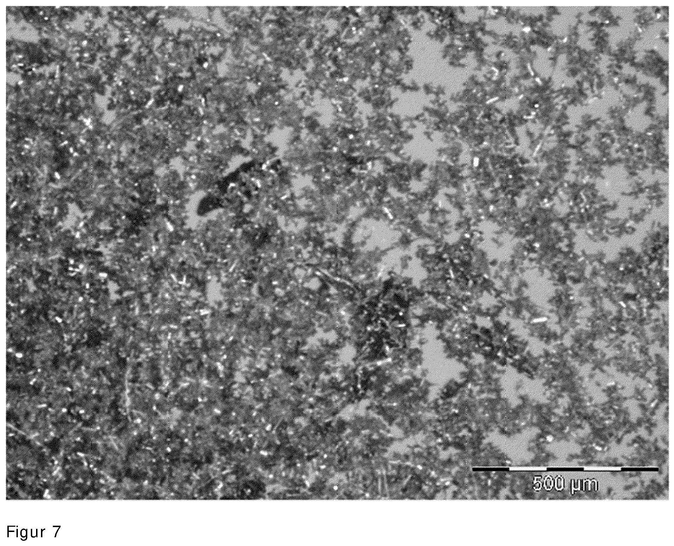

Figur 7 zeigt eine lichtmikroskopische Aufnahme des Produktes nach Schritt a). Entgegen der herkömmlichen Herstellungsverfahren liegt das Pulver nicht in Form von nadelförmigen Kristallen vor. Vielmehr lag die Partikelgröße von mehr als 95% der Gesamtanzahl der Pulverpartikel bei weniger als 100 $\mu$m, basieren auf der längsten longitudinalen Abmessung der Partikel.

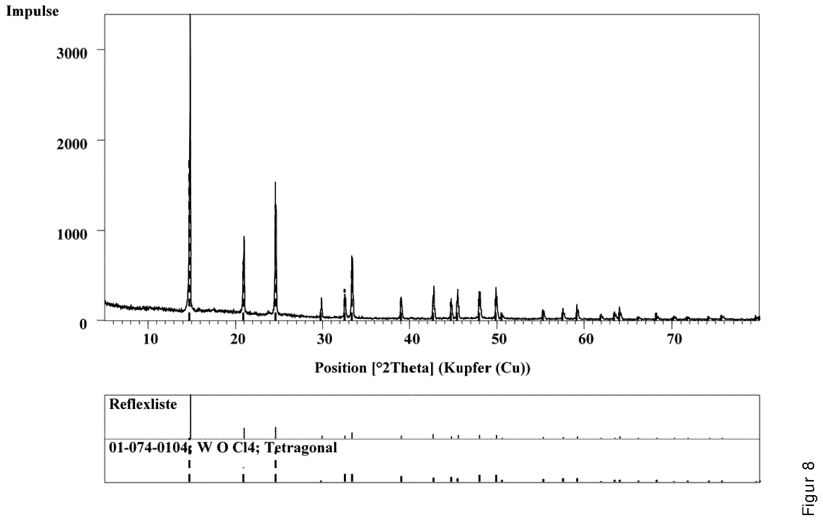

Figur 8 zeigt ein Röntgenbeugungsdiagramm des nach Schritt b) erhaltenen Produkts aus Versuch 4.2. Wie aus dem Diagramm ersichtlich, erfolgte eine vollständige Oxidation des $WCl_6$ zum gewünschten $WOCl_4$.

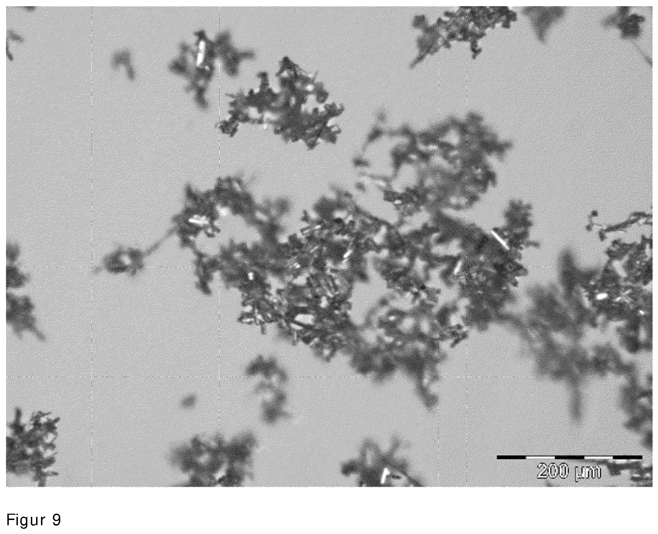

Wie die lichtmikroskopische Aufnahme der Figur 9 zeigt, wurde die Morphologie des Wolfram(VI)oxidtetrachlorid durch die Oxidation in keiner Weise beeinträchtigt. Auch im Endprodukt des Versuches 4.2 lag das Wolfram(VI)oxidtetrachlorid in Form kleiner Partikel mit einer Partikelgröße von mehr als 95% der Gesamtanzahl der Pulverpartikel bei weniger als 100 $\mu$m vor.

Wie aus Tabelle 2 ersichtlich, konnten in den Versuchen 4.1 bis 4.6 erfindungsgemäße Wolfram(VI)oxidtetrachloride mit einer chemischen Reinheit von größer 99.95% und keinen nachweisbaren Nebenphasen bzw. Nebenphasen mit einem I(P2)100 / I($WOCl_4$)100 Verhältnis von kleiner 0,03 hergestellt werden, insbesondere durch eine Kontrolle der Oxidationsbedingungen im zweiten Schritt des erfindungsgemäßen Verfahrens. Beim Verlassen des vorteilhaften Prozessfensters für die Oxidation analog Versuchen 4.7 und 4.8, entstehen schnell steigende Mengen an $WO_2Cl_2$, was durch einen Anstieg des I(P2)100 / I($WOCl_4$)100 Verhältnis sichtbar wird.

Die Ermittlung der Anteile kristalliner Wolframverbindungen erfolgt mittels Röntgendiffraktometrie, beispielsweise bestimmt an pulverförmigen Proben mit einem Gerät der Firma Malvern-PANalytical (X'Pert-MPD mit Halbleiterdetektor, Röntgenröhre Cu LFF mit 40KV / 40mA, Ni-Filter). Bei der qualitativen Analyse der Röntgenbeugungsdiagramme wurden die ermittelten Reflexe literaturbekannten Reflexen der Wolframverbindungen zugeordnet.

Die Spurenanalytik der chemischen Verunreinigungen wurde mittels ICP-OES unter Verwendung der folgenden Analysegeräten PQ 9000 (Analytik Jena) oder Ultima 2 (Horiba) durchgeführt. Die ermittelte chemische Reinheit ergibt sich rechnerisch als Differenz zwischen der hypothetischen verunreinigungsfreien Probe, die nur die Elemente Wolfram, Chlor und Sauerstoff enthält, mit 100 Gew. % und der Summe aller Verunreinigungen, die alle übrigen Elemente beinhalten, einschließlich aller Metalle, Nichtmetalle und Si in Gew.%.

**Patentansprüche**

1. Wolfram(VI)oxidtetrachlorid, **dadurch gekennzeichnet, dass** das Wolfram(VI)oxidtetrachlorid eine chemische Reinheit von größer 99,95% aufweist und wobei das Wolfram(VI)oxidtetrachlorid einen Anteil an Verbindungen ausgewählt aus der Gruppe bestehend aus $WCl_6$, $WO_2Cl_2$, $WO_3$ und $WO_2$, definiert als das Verhältnis des Reflexes mit der höchsten Intensität einer dieser Verbindungen (I(P2)100) im Röntgendiffraktogramm und des Reflexes mit der höchsten Intensität des Wolfram(VI)oxidtetrachlorids (I($WOCl_4$)100) im Röntgendiffraktogramm, ausgedrückt als I(P2)100/I($WOCl_4$)100, von kleiner 0,03 aufweist.

2. Wolfram(VI)oxidtetrachlorid gemäß Anspruch 1, **dadurch gekennzeichnet, dass** das Wolfram(VI)oxidtetrachlorid einen Anteil an Nebenphasen, definiert als das Verhältnis des Reflexes mit der höchsten Intensität einer Nebenphase (I(P2)100) und des Reflexes mit der höchsten Intensität des Wolfram(VI)oxidtetrachlorids (I($WOCl_4$)100), ausgedrückt als I(P2)100/I($WOCl_4$)100, von kleiner 0,02, vorzugsweis 0,001 bis 0,02, besonders bevorzugt 0,001 bis 0,01 aufweist, jeweils mittels Röntgendiffraktometrie.

3. Wolfram(VI)oxidtetrachlorid gemäß wenigstens einem der Ansprüche 1 oder 2, **dadurch gekennzeichnet, dass** das Wolfram(VI)oxidtetrachlorid eine chemische Reinheit von 99,99% oder mehr, vorzugsweise 99,995% oder mehr, besonders bevorzugt 99,999% oder mehr aufweist.

4. Wolfram(VI)oxidtetrachlorid gemäß wenigstens einem der Ansprüche 1 bis 3, **dadurch gekennzeichnet, dass** das Wolfram(VI)oxidtetrachlorid Silizium und/oder Siliziumverbindungen in einer Menge von weniger als 50 ppm, vorzugsweise weniger als 25 ppm, besonders bevorzugt von weniger als 5 ppm aufweist, jeweils bezogen auf das Gesamtgewicht des Wolfram(VI)oxidtetrachlorid.

5. Wolfram(VI)oxidtetrachlorid gemäß wenigstens einem der Ansprüche 1 bis 4, **dadurch gekennzeichnet, dass** das Wolfram(VI)oxidtetrachlorid Schwefel und/oder Schwefelverbindungen in einer Menge von weniger als 100 ppm, vorzugsweise weniger als 30 ppm, besonders bevorzugt von weniger als 10 ppm aufweist, jeweils bezogen auf das Gesamtgewicht des Wolfram(VI)oxidtetrachlorid.

**6.** Wolfram(VI)oxidtetrachlorid gemäß wenigstens einem der Ansprüche 1 bis 5, **dadurch gekennzeichnet, dass** das Wolfram(VI)oxidtetrachlorid einen Anteil an Molybdän und/oder seinen Verbindungen von weniger als 20 ppm, vorzugsweise weniger als 10 ppm, besonders bevorzugt von weniger als 5 ppm aufweist, jeweils bezogen auf das Gesamtgewicht des Wolfram(VI)oxidtetrachlorids

**7.** Wolfram(VI)oxidtetrachlorid gemäß wenigstens einem der Ansprüche 1 bis 6, **dadurch gekennzeichnet, dass** der Anteil an metallischen Verunreinigungen im Wolfram(VI)oxidtetrachlorid weniger als 100 ppm, vorzugsweise weniger als 70 ppm beträgt, jeweils bezogen auf das Gesamtgewicht des Wolfram(VI)oxidtetrachlorid.

**8.** Wolfram(VI)oxidtetrachlorid gemäß wenigstens einem der Ansprüche 1 bis 7, **dadurch gekennzeichnet, dass** das Wolfram(VI)oxidtetrachlorid Kohlenstoff in einer Menge von weniger als 200 ppm, vorzugsweise weniger als 100 ppm, besonders bevorzugt von weniger als 40 ppm aufweist, jeweils bezogen auf das Gesamtgewicht des Wolfram(VI)oxidtetrachlorid.

**9.** Wolfram(VI)oxidtetrachlorid gemäß wenigstens einem der Ansprüche 1 bis 8, **dadurch gekennzeichnet, dass** das Wolfram(VI)oxidtetrachlorid in Form eines Pulvers vorliegt, wobei 90%. aller Pulverpartikel eine Partikelgröße von 100 $\mu$m oder weniger aufweisen, vorzugsweise von 70 $\mu$m oder weniger aufweisen, bestimmt mittels optischer Mikroskopie.

**10.** Wolfram(VI)oxidtetrachlorid gemäß wenigstens einem der Ansprüche 1 bis 9, **dadurch gekennzeichnet, dass** das Wolfram(VI)oxidtetrachlorid ein Schüttgewicht von größer 0,5 g/cm$^3$ aufweist.

**11.** Verfahren zur Herstellung von Wolfram(VI)oxidtetrachlorid gemäß wenigstens einem der Ansprüche 1 bis 10, **dadurch gekennzeichnet, dass** in einem ersten Schritt a) Wolframmetall mit Chlorgas und Sauerstoff zur Reaktion gebracht wird und das erhaltene Produktgemisch in einem weiteren Schritt b) einer Oxidation in Gegenwart eines Oxidationsmittels unterzogen wird unter Erhalt von Wolfram(VI)oxidtetrachlorid.

**12.** Verfahren gemäß Anspruch 11, **dadurch gekennzeichnet, dass** das Oxidationsmittel in Schritt b) ausgewählt ist aus der Gruppe bestehend aus Sauerstoff, Wasser und Wasserdampf.

**13.** Verfahren gemäß wenigstens einem der Ansprüche 11 oder 12, **dadurch gekennzeichnet, dass** die Oxidation in Schritt b) bei einer relativen Luftfeuchtigkeit von 20 bis 80%, vorzugsweise 40 bis 60% mit Wasser als Oxidationsmittel durchgeführt wird.

**14.** Verfahren gemäß wenigstens einem der Ansprüche 11 bis 13, **dadurch gekennzeichnet, dass** die Oxidation in Schritt b) bei einer Temperatur von 0 bis 80 °C, vorzugsweise 0 bis 60 °C, vorgenommen wird.

**15.** Verfahren gemäß wenigstens einem der Ansprüche 11 bis 14, **dadurch gekennzeichnet, dass** der Sauerstoff in Schritt a) in einem unterstöchiometrischen Verhältnis, wobei das stöchiometrische Verhältnis von Sauerstoff zu Wolframmetall vorzugsweise 0,85 bis 0,97 und insbesondere 0,85 bis 0,9 beträgt.

**16.** Verwendung von Wolfram(VI)oxidtetrachlorid gemäß wenigstens einem der Ansprüche 1 bis 10 als Katalysator in chemischen Reaktionen, insbesondere in der Herstellung von funktionalen Kohlenwasserstoffen; in der Halbleiterindustrie, und/oder in Sol-Gel-Prozessen, insbesondere zur Herstellung elektrochromer Beschichtungen.

**Claims**

**1.** Tungsten(VI) oxytetrachloride, **characterized in that** tungsten(VI) oxytetrachloride has a chemical purity of greater than 99.95% and where the tungsten(VI) oxytetrachloride has a fraction of compounds selected from the group consisting of $WCl_6$, $WO_2Cl_2$, $WO_3$ and $WO_2$, defined as the ratio of the reflection having the highest intensity of one of these compounds (I(P2)100) in the x-ray diffraction pattern to the reflection having the highest intensity of the tungsten(VI) oxytetrachloride (I(WOCl$_4$)100) in the x-ray diffraction pattern, expressed as I(P2)100/I(WOCl$_4$)100, of less than 0.03.

**2.** Tungsten(VI) oxytetrachloride according to Claim 1, **characterized in that** the tungsten(VI) oxytetrachloride has a fraction of secondary phases, defined as the ratio of the reflection having the highest intensity of a secondary phase (I(P2)100) to the reflection having the highest intensity of the tungsten(VI) oxytetrachloride (I(WOCl$_4$)100), expressed

as I(P2)100/I(WOCl$_4$)100, of less than 0.02, preferably 0.001 to 0.02, more preferably 0.001 to 0.01, in each case by means of x-ray diffractometry.

3. Tungsten(VI) oxytetrachloride according to at least one of Claims 1 and 2, **characterized in that** the tungsten(VI) oxytetrachloride has a chemical purity of 99.99% or more, preferably 99.995% or more, more preferably 99.999% or more.

4. Tungsten(VI) oxytetrachloride according to at least one of Claims 1 to 3, **characterized in that** the tungsten(VI) oxytetrachloride comprises silicon and/or compounds of silicon in an amount of less than 50 ppm, preferably less than 25 ppm, more preferably of less than 5 ppm, based in each case on the total weight of the tungsten(VI) oxytetrachloride.

5. Tungsten(VI) oxytetrachloride according to at least one of Claims 1 to 4, **characterized in that** the tungsten(VI) oxytetrachloride comprises sulfur and/or compounds of sulfur in an amount of less than 100 ppm, preferably less than 30 ppm, more preferably of less than 10 ppm, based in each case on the total weight of the tungsten(VI) oxytetrachloride.

6. Tungsten(VI) oxytetrachloride according to at least one of Claims 1 to 5, **characterized in that** the tungsten(VI) oxytetrachloride has a fraction of molybdenum and/or its compounds of less than 20 ppm, preferably less than 10 ppm, more preferably of less than 5 ppm, based in each case on the total weight of the tungsten(VI) oxytetrachloride.

7. Tungsten(VI) oxytetrachloride according to at least one of Claims 1 to 6, **characterized in that** the fraction of metallic impurities in the tungsten(VI) oxytetrachloride is less than 100 ppm, preferably less than 70 ppm, based in each case on the total weight of the tungsten(VI) oxytetrachloride.

8. Tungsten(VI) oxytetrachloride according to at least one of Claims 1 to 7, **characterized in that** the tungsten(VI) oxytetrachloride comprises carbon in an amount of less than 200 ppm, preferably less than 100 ppm, more preferably of less than 40 ppm, based in each case on the total weight of the tungsten(VI) oxytetrachloride.

9. Tungsten(VI) oxytetrachloride according to at least one of Claims 1 to 8, **characterized in that** the tungsten(VI) oxytetrachloride is in the form of a powder where 90% of all the powder particles have a particle size of 100 μm or less, preferably of 70 μm or less, determined by means of optical microscopy.

10. Tungsten(VI) oxytetrachloride according to at least one of Claims 1 to 9, **characterized in that** the tungsten(VI) oxytetrachloride has a bulk density of greater than 0.5 g/cm3.

11. Method for producing tungsten(VI) oxytetrachloride according to at least one of Claims 1 to 10, **characterized in that** in a first step a) tungsten metal is reacted with chlorine gas and oxygen and the resulting product mixture is subjected in a further step b) to an oxidation in the presence of an oxidizing agent to give tungsten(VI) oxytetrachloride.

12. Method according to Claim 11, **characterized in that** the oxidizing agent in step b) is selected from the group consisting of oxygen, water and steam.

13. Method according to at least one of Claims 11 and 12, **characterized in that** the oxidation in step b) is carried out at a relative atmospheric humidity of 20% to 80%, preferably 40% to 60% with water as oxidizing agent.

14. Method according to at least one of Claims 11 to 13, **characterized in that** the oxidation in step b) is performed at a temperature of 0 to 80°C, preferably 0 to 60°C.

15. Method according to at least one of Claims 11 to 14, **characterized in that** the oxygen in step a) in a substoichiometric proportion, with the stoichiometric ratio of oxygen to tungsten metal being preferably 0.85 to 0.97 and more particularly 0.85 to 0.9.

16. Use of tungsten (VI) oxytetrachloride according to at least one of Claims 1 to 10 as a catalyst in chemical reactions, more particularly in the preparation of functional hydrocarbons; in the semiconductor industry, and/or in sol-gel processes, especially for producing electrochromic coatings.

## EP 4 087 821 B1

**Revendications**

1. Tétrachlorure d'oxyde de tungstène (VI), **caractérisé en ce que** le tétrachlorure d'oxyde de tungstène (VI) présente une pureté chimique supérieure à 99,95% et le tétrachlorure d'oxyde de tungstène (VI) présentant une proportion de composés choisis dans le groupe constitué par $WCl_6$, $WO_2Cl_2$, $WO_3$ et $WO_2$, définie comme le rapport de la réflexion présentant l'intensité la plus élevée d'un de ces composés (I(P2)100) dans le diffractogramme de rayons X et de la réflexion présentant l'intensité la plus élevée du tétrachlorure d'oxyde de tungstène (VI) (I(WOCl$_4$)100) dans le diffractogramme de rayons X, exprimé comme I(P2)100/I(WOCl$_4$)100, inférieure à 0,03.

2. Tétrachlorure d'oxyde de tungstène (VI) selon la revendication 1, **caractérisé en ce que** le tétrachlorure d'oxyde de tungstène (VI) présente une proportion de phases secondaires, définie comme le rapport de la réflexion de l'intensité la plus élevée d'une phase secondaire (I(P2)100) et de la réflexion de l'intensité la plus élevée du tétrachlorure d'oxyde de tungstène (VI) (I(WOCl$_4$)100), exprimé comme I(P2)100/I(WOCl$_4$)100, inférieure à 0,02, de préférence de 0,001 à 0,02, de manière particulièrement préférée de 0,001 à 0,01, à chaque fois par diffractométrie de rayons X.

3. Tétrachlorure d'oxyde de tungstène (VI) selon au moins l'une des revendication 1 ou 2, **caractérisé en ce que** le tétrachlorure d'oxyde de tungstène (VI) présente une pureté chimique de 99,99% ou plus, de préférence de 99,995% ou plus, de manière particulièrement préférée de 99,999% ou plus.

4. Tétrachlorure d'oxyde de tungstène (VI) selon au moins l'une des revendication 1 à 3, **caractérisé en ce que** le tétrachlorure d'oxyde de tungstène (VI) présente du silicium et/ou des composés du silicium en une quantité inférieure à 50 ppm, de préférence inférieure à 25 ppm, de manière particulièrement préférée inférieure à 5 ppm, à chaque fois par rapport au poids total du tétrachlorure d'oxyde de tungstène (VI).

5. Tétrachlorure d'oxyde de tungstène (VI) selon au moins l'une des revendication 1 à 4, **caractérisé en ce que** le tétrachlorure d'oxyde de tungstène (VI) présente du soufre et/ou des composés du soufre en une quantité inférieure à 100 ppm, de préférence inférieure à 30 ppm, de manière particulièrement préférée inférieure à 10 ppm, à chaque fois par rapport au poids total du tétrachlorure d'oxyde de tungstène (VI).

6. Tétrachlorure d'oxyde de tungstène (VI) selon au moins l'une des revendication 1 à 5, **caractérisé en ce que** le tétrachlorure d'oxyde de tungstène (VI) présente une proportion de molybdène et/ou de ses composés inférieure à 20 ppm, de préférence inférieure à 10 ppm, de manière particulièrement préférée inférieure à 5 ppm, à chaque fois par rapport au poids total du tétrachlorure d'oxyde de tungstène (VI).

7. Tétrachlorure d'oxyde de tungstène (VI) selon au moins l'une des revendications 1 à 6, **caractérisé en ce que** la proportion d'impuretés métalliques dans le tétrachlorure d'oxyde de tungstène (VI) est inférieure à 100 ppm, de préférence inférieure à 70 ppm, à chaque fois par rapport au poids total du tétrachlorure d'oxyde de tungstène (VI).

8. Tétrachlorure d'oxyde de tungstène (VI) selon au moins l'une des revendication 1 à 7, **caractérisé en ce que** le tétrachlorure d'oxyde de tungstène (VI) présente du carbone en une quantité inférieure à 200 ppm, de préférence inférieure à 100 ppm, de manière particulièrement préférée inférieure à 40 ppm, à chaque fois par rapport au poids total du tétrachlorure d'oxyde de tungstène (VI).

9. Tétrachlorure d'oxyde de tungstène (VI) selon au moins l'une des revendications 1 à 8, **caractérisé en ce que** le tétrachlorure d'oxyde de tungstène (VI) se trouve sous forme d'une poudre, 90% de toutes les particules de poudre présentant une grosseur de particule de 100 $\mu$m ou moins, de préférence de 70 $\mu$m ou moins, déterminée par microscopie optique.

10. Tétrachlorure d'oxyde de tungstène (VI) selon au moins l'une des revendications 1 à 9, **caractérisé en ce que** le tétrachlorure d'oxyde de tungstène (VI) présente une densité apparente supérieure à 0,5 g/cm$^3$.

11. Procédé de préparation de tétrachlorure d'oxyde de tungstène (VI) selon au moins l'une des revendications 1 à 10, **caractérisé en ce que**, dans une première étape, du tungstène métallique est amené à réagir avec du chlore gazeux et de l'oxygène et le mélange de produits obtenu est soumis, dans une autre étape b), à une oxydation en présence d'un agent d'oxydation avec obtention de tétrachlorure d'oxyde de tungstène (VI).

12. Procédé selon la revendication 11, **caractérisé en ce que** l'agent d'oxydation dans l'étape b) est choisi dans le groupe constitué par l'oxygène, l'eau et la vapeur d'eau.

**13.** Procédé selon au moins l'une des revendications 11 ou 12, **caractérisé en ce que** l'oxydation dans l'étape b) est réalisée à une humidité relative de l'air de 20 à 80%, de préférence de 40 à 60% avec de l'eau comme agent d'oxydation.

**14.** Procédé selon l'une au moins des revendications 11 à 13, **caractérisé en ce que** l'oxydation dans l'étape b) est réalisée à une température de 0 à 80°C, de préférence de 0 à 60°C.

**15.** Procédé selon au moins l'une des revendications 11 à 14, **caractérisé en ce que** l'oxygène dans l'étape a) dans un rapport inférieur au rapport stœchiométrique, le rapport stœchiométrique d'oxygène à tungstène métallique valant de préférence 0,85 à 0,97 et en particulier 0,85 à 0,9.

**16.** Utilisation de tétrachlorure d'oxyde de tungstène (VI) selon au moins l'une des revendications 1 à 10 comme catalyseur dans des réactions chimiques, en particulier dans la préparation d'hydrocarbures fonctionnels ; dans l'industrie des semi-conducteurs et/ou dans les procédés sol-gel, en particulier pour la réalisation de revêtements électrochromes.

Figure 1

Figur 2a

Figur 2b

Figur 3

Figur 4

Figur 5

Figur 6

Figur 7

Figur 8

Figur 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3347918

- EP 3738928 A

**In der Beschreibung aufgeführte Nicht-Patentliteratur**

- **N. OZER et al.** *Optical and Electrochromic Properties of Sol-Gel Deposited Doped Tungsten Oxide Films*, January 1996
- **R.H. CHABTREE**. On a convenient synthesis of WOCl4 and the question of the existence of Cp2WOCl. *Polyhedron*, 1985, vol. 4 (3), 521-522

- **F. ZADO**. The high yield synthesis of the Tungsten(VI) oxyhalides WOCl4, WOBr4 and WO2Cl2 and some observations on tungsten(VI) bromide and tungsten(V) chloride. *J. Inorg. Nucl. Chem.*, 1963, vol. 25, 1115
- **A.E. CASTRO LUNAR et al.** *J. Chem. Eng. Data*, 1983, vol. 26, 349-350